# EUROPEAN PATENT SPECIFICATION

(11) **EP 2 202 106 B1**
(45) Date of publication and mention of the grant of the patent: **03.07.2013**
(21) Application number: 08172888.3
(22) Date of filing: 24.12.2008
(51) Int. Cl.: B60H 1/00, B60H 1/24

(54) **Air treatment unit for a transport vehicle and corresponding control method**
Luftaufbereitungsanlage für ein Transportfahrzeug und entsprechendes Steuerverfahren
Unité de traitement de l'air pour véhicule de transport et procédé de contrôle correspondant

(43) Date of publication of application: 30.06.2010
(73) Proprietor: Iveco France S.A., 69200 Vénissieux (FR)
(72) Inventor: Belkouche, Yazid Yaniss, 69008 Lyon (FR)
(74) Representative: Borsano, Corrado

(56) References cited:
- WO-A-2007/147545
- DE-A1- 10 259 973
- DE-A1- 19 625 927
- DE-A1-102004 051 912
- US-B1- 6 758 739

## Description

The present invention relates to an air treatment unit for a transport vehicle, an air treatment assembly comprising such a unit, a method for controlling this air treatment assembly, and a transport vehicle comprising such a unit or such an air treatment assembly.

The invention is aimed in particular, but not exclusively, at transport vehicles whose route includes at least one station stop, during which people are likely to get onto this vehicle, or else to get off it. According to the invention, this vehicle may optionally be guided on an exclusive route, notably by means of electric wires, rails or else optical means. In addition, this vehicle may be of the road type, but also of the rail type.

Such a transport vehicle conventionally comprises a chassis mounted on at least one axle supporting rolling members, usually wheels, which may optionally be mounted on tyres. In these situations, the transport vehicles within the meaning of the invention comprise notably, but not exclusively, buses, trolley buses or else trams. However, the invention also finds its application on transport vehicles of the coach type, and on train carriages or on underground train sets.

When a transport vehicle is in service, the inside air needs to be renewed periodically. For this reason, it is known practice, at predetermined time intervals, to extract a volume of this inside air which is replaced by a corresponding volume of outside air.

This known method of air treatment however has certain disadvantages. Specifically, the air is changed in a random manner, without making use of a particular criteria, associated notably with the hygiene of the passenger compartment and/or the quality of the air breathed by the passengers.

Examples of conditioning system are given in closest prior art document US6758739, W02007/147545 and US2007/0187530, whom features are disclosed in the preamble of claim 1.

In other words, in certain cases, the inside air is not renewed, whereas it should be for reasons of salubrity. In these circumstances, the prior art is inadequate in terms of hygiene.

In addition, in certain other cases, the inside air is changed, when such an operation is not necessary. The use of the prior art then has its limits, from an economic point of view.

This being the case, the invention aims to remedy these various disadvantages.

Its object in particular is to propose an air treatment unit and assembly for a transport vehicle which guarantee a comfort that is satisfactory to the passengers, while consuming relatively little energy. The invention also aims to propose a method of controlling this air treatment assembly, which is both convenient to apply, not very inconvenient for the passengers and which consumes little energy.

Accordingly, its subject is an air treatment unit according to Claim 1 appended. Advantageous features of this unit are the subject of Claims 2 to 7.

A further subject of the invention is an air treatment assembly according to Claim 8 appended, and a method for controlling this assembly according to Claim 9. Advantageous features of this method are the subject of Claim 10.

Finally, the subject of the invention is a transport vehicle according to Claim 11 appended. Advantageous features of this vehicle are the subject of Claims 12 to 15.

The invention will be better understood and other advantages of the latter will appear more clearly in the light of the following description of an embodiment of a transport vehicle according to its principle, given only as a non-limiting example and made with reference to the appended drawings in which:
- Figure 1 is a view in perspective illustrating schematically a transport vehicle and an air conditioning device according to the invention that is fitted to this vehicle;
- Figure 2 is a view in perspective, illustrating an air treatment unit fitted to the vehicle of Figure 1;
- Figures 3 and 4 are views in section, along the respective lines III-III and IV-IV in Figure 2; and
- Figures 5 and 6 illustrate two operating modes associated with the air treatment unit of Figures 2 to 4.

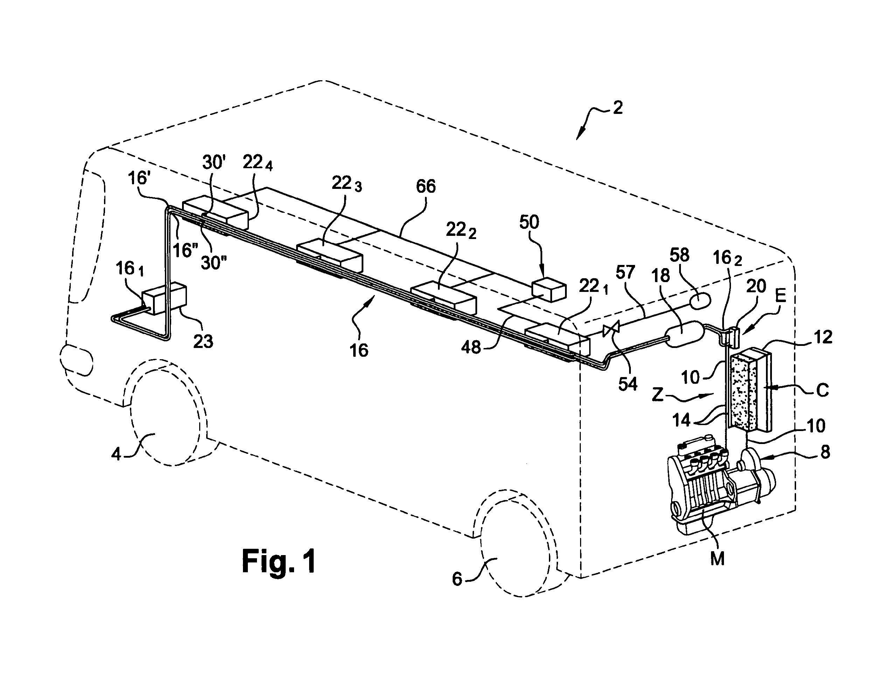

Figure 1 represents a transport vehicle that is fitted with an air treatment unit according to the invention. It will be noted that this unit may be adapted to transport vehicles of types other than that described below. Therefore, as has been mentioned in the introductory part of the present application, the unit according to the invention may be used on vehicles of the road type, as described in greater detail below, but also of the rail type such as an underground train set or an overground railway carriage.

The transport vehicle illustrated in Figure 1, which is for example a bus, a trolleybus, a tram or else a coach, comprises, in a manner known per se, a body shell 2, which is represented schematically in dashed lines. This body shell is mounted in a conventional manner on two axles, respectively front and rear axles, which are fitted with rolling members. In the example illustrated, the latter are wheels mounted on tyres, respectively given reference numbers 4 and 6 for the front and rear axles. Therefore, in Figure 1, the front portion of the transport vehicle is shown on the left, while its rear portion is on the right.

The air conditioning device fitted to this transport vehicle first of all comprises a compressor 8, of a type known per se. The latter is provided at the rear of the vehicle, because it is incorporated into the engine of the latter, which is marked M and which is represented schematically. A tubular duct in the form of a loop 10, in which a coolant called the main coolant circulates, extends from this compressor 8, only in the rear portion of the transport vehicle.

This loop 10 extends first of all through a condensation stage C, which comprises in conventional manner a heat exchanger 12 and fans 14. In addition, this loop 10 extends through an evaporation stage E, which notably comprises a heat exchanger 20.

These various mechanical and thermodynamic members are of a type known per se, so they are described briefly above. The compressor 8, the loop 10 and the respective condensation stage C and evaporation stage E form a main cold production zone Z placed at the rear of the vehicle.

The air conditioning device according to the invention also comprises an auxiliary loop 16, in which an auxiliary fluid, such as water with an additive, in particular water with glycol, circulates. Accordingly, this loop is for example provided with a circulation pump not shown. This auxiliary loop extends generally in a longitudinal manner, between the front and the rear of the transport vehicle. Therefore its front end is denoted 16₁ and its rear end 16₂.

This rear end 16₂ is placed in communication with a reserve 18, in which a small portion of the auxiliary fluid is stored at low temperature, ranging for example between 5 and 10°C. This reserve is for example housed in the engine compartment of the vehicle.

Furthermore, this rear end 16₂ exchanges heat with the main loop 10, within the heat exchanger 20 belonging to the evaporation stage E. In its intermediate portion, the auxiliary loop 16 exchanges heat with air treatment units which, in this instance, are four in number and are given reference numbers 22₁ to 22₄. Finally, at its front end 16₁, the loop 16 exchanges heat with an additional diffuser 23, of a type known per se, which is incorporated into the fascia panel of the vehicle.

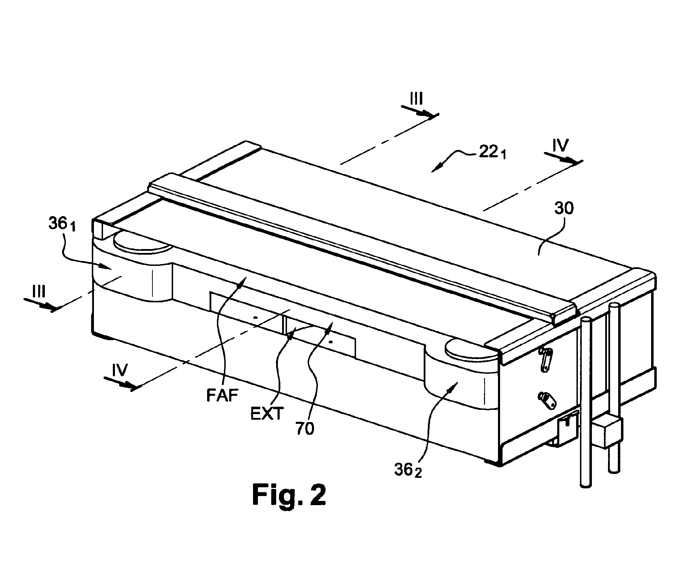

Figures 2 to 6 illustrate more precisely one 22₁ of the air treatment units, in this instance that placed at the rear of the vehicle. As will be seen below, the other three units 22₂ to 22₄ are similar to this rear unit 22₁, while however having a simplified structure. Nevertheless the unit 22₁ comprises additional members which make it possible not only to increase the functionalities of the units 22₂ to 22₄ that are called standard, but also to perform an additional service of purifying the passenger compartment.

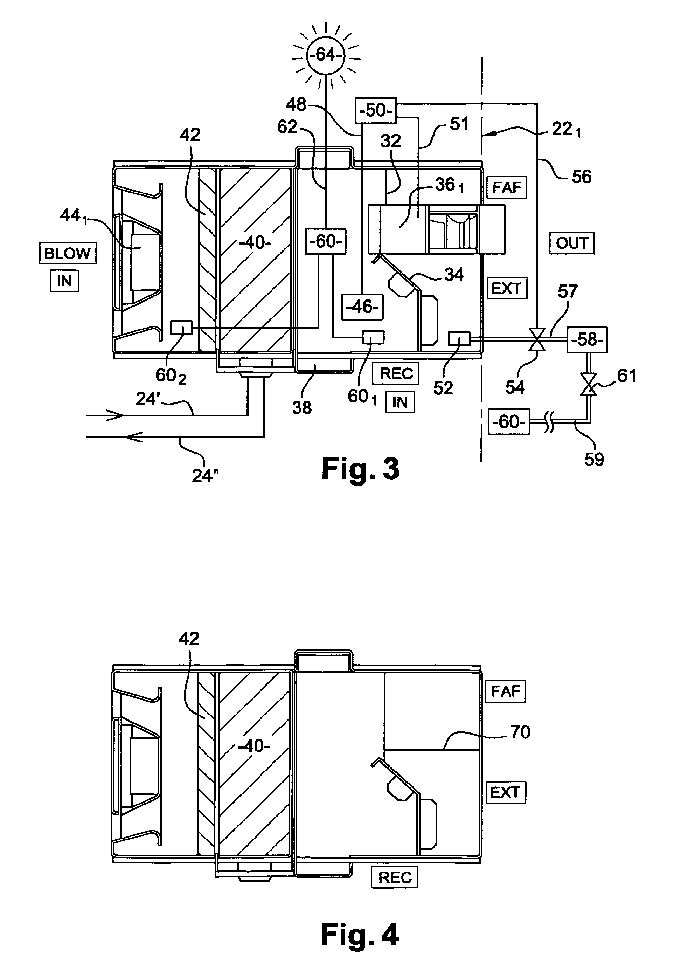

The unit 22₁ comprises a body 30, flaps 32 and 34 allowing outside air to enter and inside air to leave, thanks to the operation of fans 36₁, 36₂ and 44₁. More precisely, with reference in particular to Figures 3 and 4, various openings, associated with the air treatment unit 22₁, are defined.

Denoted BLOW first of all is the opening for discharging air towards the passenger compartment, which is situated on the left of this opening BLOW while being given the reference IN. Also, denoted FAF is the opening for renewal with outside air, the ambient air being denoted OUT and situated on the right of this opening FAF.

In addition, denoted REC is the opening for recycling of inside air, which may therefore be distributed, in order to be expelled to the outside and/or recycled to the passenger compartment as will be seen below. Finally, denoted EXT is the opening for the extraction of air towards the outside OUT.

There is also a filter 38, and a main heat exchanger 40, which in this instance is a battery with fins supplied with auxiliary fluid circulating in the auxiliary loop 16.

Accordingly, denoted 24' and 24" are the branch lines of this loop 16, which enter the heat exchanger 40.

The unit 22₁ is provided with a secondary heat exchanger 42, supplied in a manner not shown by the engine cooling circuit, so that this heat exchanger 42 and the main heat exchanger 40 can be used for operations of dehumidifying the passenger compartment, as will be explained below. Finally, various blower fans 44, only one 44₁ of which is illustrated in the figures, blow air towards the passenger compartment.

Also provided is a sensor 46 making it possible to measure a parameter relating to the passenger compartment of the vehicle. Such a parameter is notably the carbon dioxide content in this passenger compartment. The sensor 46 is connected, via a line 48, to a central control member 50, which is of a type known per se. This control member 50 is also connected, via an additional line 51, to the inlet and outlet flaps 32 and 34 and to the fans 36₁, 36₂ and 44₁.

The treatment unit 22₁ is also fitted with a cartridge 52, containing an auxiliary substance, notably of the disinfecting and/or deodorizing type. This cartridge 52 is associated with a valve 54, incorporated into the air treatment unit, and connected to the electronics of the vehicle by means of a corresponding line 56. A first pipe 57 extends from this valve 54 towards the rear face of the passenger compartment.

Also, an additional pipe 59 extends towards the rear face of the passenger compartment, while being supplied by a source 60 of compressed air from the vehicle, via an additional valve 61. These pipes lead into a spray nozzle 58, which is suitable for directing a mixture of air and of the aforementioned auxiliary substance into the passenger compartment, in the form of a microdiffusion of fine droplets. The assembly formed by the cartridge 52, the valves 54 and 61, the pipes 57 and 59, and the spray nozzle 58, forms the vehicle passenger compartment purification device incorporated into the unit 22₁, as is more particularly illustrated in Figures 1 and 3.

Finally, a sensor 60 is provided, comprising two measurement points 60₁ and 60₂, which is capable of measuring the degree of clogging of the filter 38. This sensor 60 is connected, via a line 62, to an indicator 64 capable of indicating that the filter is clogged.

The other three air treatment units 22₂ to 22₄ are generally similar, with respect to their structure, to the main unit 22₁. In particular, they are fitted with the same body 30, flaps 32 and 34, various fans 36₁, 36₂ and 44, and heat exchangers 40 and 42. On the other hand, the secondary units 22₂ to 22₄ do not have neither sensors 46, 60, nor the purification device and the associated electronics.

It will be noted, with reference to Figure 1, that the central control member 50 is connected, via a secondary control line 66, to these various units 22₂ to 22₄. The main unit 22₁ forms, with the various secondary units 22₂ to 22₄, an air treatment assembly according to the invention. The use of this air treatment assembly will now be explained below.

In service, the main loop 10 supplies refrigeration in a conventional manner, downstream of the condensation stage C. However, unlike the usual solutions, this refrigeration is not delivered directly to the air of the passenger compartment of the vehicle but is transferred, in the heat exchanger 20, to the auxiliary fluid circulating in the loop 16. This auxiliary fluid then transports the refrigeration to the various units 22₁ to 22₄. As has been mentioned above, these units may have a structure which is different from that described on the figures, while being adapted for a direct circulation of fluid, in view of refrigeration of inside air. In normal operation, there is no inlet of outside air into the passenger compartment IN. In this situation, the flaps 32 and 34 are closed, the fans 36₁ and 36₂ are stopped, while the blower fans, similar to the fan 44₁, are in operation. In addition, the purification device is stopped.

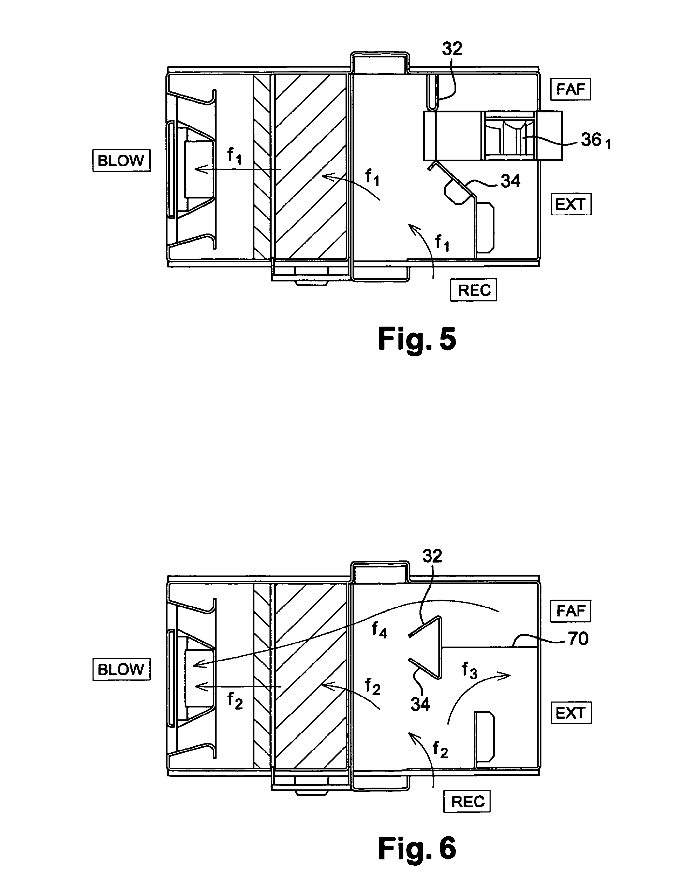

This normal operation is illustrated in Figure 5 which shows the four openings BLOW, REC, FAF and EXT. There is no air circulation via the openings FAF and EXT, since the inside air is circulating in a loop, in the direction of the arrows f₁, from the recycling opening REC to the discharge opening BLOW.

When the sensor 46 detects that the carbon dioxide content inside the passenger compartment is greater than a predetermined value, it sends a corresponding signal to the control member 50, via the line 48. This member 50 then controls the opening of the flaps 32 and 34 and starts the fans 36₁ and 36₂ while keeping the fans 44 operating.

In this situation, the air inside the passenger compartment is renewed, thanks to a provision of a quantity of outside air and the extraction of a corresponding quantity of inside air, as illustrated in Figure 6. In the latter, it will be noted that the inside air circulates, from the recycling opening REC, partly towards the discharge opening BLOW (arrow f₂) and partly towards the extraction opening EXT (arrow f₃). In addition, the outside air travels from the renewal opening FAF towards the discharge opening BLOW (arrow f₄).

Two air circulation paths are therefore defined, namely an outlet path corresponding to the arrow f₃ between the openings REC and EXT, and an admission path, corresponding to the arrow f₄, between the openings FAF and BLOW. These two paths are separated by a corrugated metal sheet 70, that can be seen in particular in Figures 2, 4 and 6. This metal sheet 70 forms a heat exchange zone between the air travelling along the two paths respectively f₃ and f₄.

Consequently, the outside air originating from the opening FAF is first cooled, by means of the inside air discharged through the opening EXT, before travelling into the main heat exchanger 40. This is advantageous in economic terms since this inflow of outside air, cooler than if it had been admitted directly without exchange with the recycled air, limits the consumption of the air conditioning system of the vehicle, in particular in the compressor 8 which takes energy from engine M. This economic advantage is also associated with the fact that the operation of air renewal is carried out, not in a random manner, but at the precise moment controlled by the measurement of the sensor 46.

As this air is renewed, the carbon dioxide content tends to reduce inside the passenger compartment. When it again has a value lower than the predetermined threshold specified above, the control member closes the flaps 32 and 34, and stops the fans 36₁ and 36₂, thereby stopping the air renewal operation. In addition, a computer, not shown, belonging to the vehicle stores the time d of this renewal of outside air initiated by the unit 22₁.

Then, this control member initiates, in a successive manner, a renewal of air in the three standard units 22₂ to 22₄. More precisely, after the air renewal sequence of the main unit 22₁, the control member transmits a signal ordering the unit 22₂ to begin its air renewal sequence for the stored time d. This operation is applied iteratively until all the units have carried out the air renewal operation in a manner identical to the main unit 22₁.

In other words, the whole renewal operation corresponds to a time of n*d, where n is the number of units including the main unit, in this instance four, while the time is the time d computed and stored with reference to the main unit. After these various air renewal sequences, the admission of outside air is stopped until the sensor 46 again detects an unacceptable rise in the carbon dioxide content.

Proceeding sequentially with these renewal operations is advantageous. Specifically, when a renewal phase is carried out according to the invention, only one unit is in operation, which makes it possible to reduce the noise nuisance generated thereby. This should be compared with the prior art in which, generally, several units operate simultaneously to renew the air, which is markedly noisier.

In addition, the installation of an air treatment system for urban transport comprising the main unit 22₁ makes it possible to purify the passenger compartment, via the purification device. The latter operates when the engine is stopped, which is not detrimental in matters of acoustics. This operation of spraying the product into the passenger compartment only involves the electric energy stored in the batteries to open the valves 54 and 61 and energy in the form of pressure available in the compressed air bottles usually available in the vehicles.

The purification operation performed by the device incorporated into the unit 22₁ is called the purification cycle. The content of the cartridge 52 makes it possible to carry out a predefined number of cycles. Therefore, to prevent the triggering of cycles with an empty cartridge, the control member of the vehicle stores the number of cycles based on each time a new cartridge is placed in service.

The purification operation according to the invention advantageously comprises a final phase, during which the units 22₁ to 22₄ are operated during for example two minutes. During this phase, these units operate in the recycling mode (like in figure 5), so that they direct the auxiliary substance of cartridge 52 towards passenger compartment IN, so that it comes into contact with filter 38.

Thus, filters of air conditioning systems, when clogged, generally undergo proliferation of bacteria and mushrooms. Hence, the carrying out of these systems induce a very unpleasant smell in the passenger compartment. It shall be noted that the invention also makes it possible to suppress this disadvantage. In this respect, the purification device of the invention, as defined above, can be adapted on a car, while the above purification cycle can be carried out.

Finally, when clogging of the filter 38 reaches a level which is likely to reduce the aerological performance of the whole unit 22₁, the sensor 60 sends a corresponding signal to the indicator 64. In this case, the user can change the filter. Usually, he then changes the various filters fitted to all of the air treatment units of the vehicle.

It will also be noted that the invention is advantageous in terms of energy-saving. Specifically, according to the invention, the air is renewed only when necessary, namely when the value of a parameter, such as the carbon dioxide content, is greater than a predetermined value. In this situation, the electrical consumption of the various elements, notably the fans, is managed rationally.

In addition, the air renewal permitted by the invention is of a satisfactory quality, since it is directly linked to the measurement of an unacceptable parameter value of the passenger compartment. It should be noted that, if this value is not monitored and controlled, this may lower the comfort of the passengers. In the above embodiment, the air renewal is controlled when the value measured by the sensor becomes greater than a predetermined threshold. As an alternative, this renewal can be operated when the value of a parameter, different from CO₂ content, becomes lower than a threshold.

An additional functionality of the treatment unit 22₁ will now be described with reference to Figure 5. Air is circulated according to the "normal" mode, namely the inside air circulates in a loop, from the opening REC to the opening BLOW. It is then possible to carry out the dehumidification of this inside air.

Accordingly, the main heat exchanger 40 is set at a low temperature, ranging for example between 5° and 7°C and, at the same time, the secondary heat exchanger 42 is set to a markedly higher temperature, ranging in particular from 70° to 80°C. In this situation, the water vapour contained in the air of the passenger compartment is cooled and condensed in the main heat exchanger 40. This therefore makes it possible to collect and then discharge this water vapour in liquid form. The humidity ratio of the air leaving the main heat exchanger 40 is therefore notably reduced. Then, this air passes through the secondary heat exchanger 42 where it is reheated so as to reach a normal temperature, going into the passenger compartment.

## Claims

1. Air treatment unit (221) designed to be fitted to an air conditioning device of a transport vehicle comprising compressed air bottles, in particular of the road or rail type, this unit comprising a body (30), at least one heat exchanger (40, 42) supplied with an auxiliary fluid, this heat exchanger being designed to condition the air intended to enter the passenger compartment of the vehicle, this main unit also comprising means (32) for admitting outside air, means (34) for extracting inside air, means (441) for blowing air towards the passenger compartment, a sensor (46) for measuring at least one parameter of the ambient air of the passenger compartment, and control means (50) suitable for controlling the opening of the means (32) for admitting outside air and means (34) for extracting inside air, when the value of this parameter is greater or lower than a predetermined value; the unit (221) being fitted with a vehicle passenger compartment purification device comprising a cartridge (52), containing an auxiliary substance, notably of the disinfecting and/or deodorizing type, pipes (57, 59) and valves (54, 61) and a spray nozzle (58) for directing a mixture of air and of the aforementioned auxiliary substance into the passenger compartment **characterized in that** said vehicle passenger compartment purification device is supplied by said compressed air bottles.

2. Air treatment unit according to Claim 1, **characterized in that** the parameter is the carbon dioxide content inside the passenger compartment.

3. Air treatment unit according to Claims 1 or 2, **characterized in that** the means for admitting outside air and for extracting inside air comprise air admission and extraction flaps (32 and 34) and at least one fan (361, 362) suitable for directing the outside air and the inside air towards the heat exchanger (40, 42) of the main treatment unit.

4. Air treatment unit according to one of the preceding claims, **characterized in that** the blowing means comprise at least one fan (441) suitable for blowing the air that has passed through the or each heat exchanger (40, 42).

5. Air treatment unit according to any one of the preceding claims, **characterized in that** the main treatment unit (22₁) is provided control means (50) suitable for opening the valve and for actuating the means for admitting this substance when the engine is stopped.

6. Air treatment unit according to any one of the preceding claims, **characterized in that** it comprises an opening (BLOW) for discharging air in the direction of the passenger compartment (IN), an opening (FAF) for renewing outside air, an opening (REC) for recycling inside air, and an opening (EXT) for extracting inside air, towards the outside (OUT).

7. Air treatment unit according to the preceding claim, **characterized in that** it defines a first air circulation path (f3) connecting the recycling opening (REC) to the extraction opening (EXT) and a second air circulation path (f4), connecting the renewal opening (FAF) and the discharge opening (BLOW), this unit also comprising a heat exchange zone (70) between these two circulation paths.

8. Air treatment assembly designed to be fitted to an air conditioning device for a transport vehicle, comprising two or more air treatment units, according to any one of the preceding claims.

9. Air treatment assembly according to claim 8, further comprising control means configured to order the units (22₁, 22₂, 22₃) to iteratively begin their air renewal sequence until all the units have carried out the air renewal operation, one after the other.

10. Method for controlling the air treatment assembly according to the preceding Claims 8 or 9, wherein the means (32, 34, 36) for admitting outside air and for extracting inside air are started when the sensor (46) detects a parameter value that is greater, or lower, than a predetermined value, in order to carry out an air renewal sequence, then these admission and extraction means are stopped when the sensor detects a value of this parameter that is again lower, or greater, than this predetermined value.

11. Method according to Claim 10 **characterized in that** the time (d) of the said air renewal sequence applied by means of a first treatment unit (221) is measured, then at least one other air renewal sequence is applied by means of a second treatment unit (222-224), one after the other, for a same time (d) thus measured.

12. Transport vehicle, notably a bus, trolleybus, tram, coach, underground train or overground train comprising a body shell (2) resting on at least one axle associated with rolling members, notably wheels (4, 6), and an air conditioning device comprising at least one air treatment unit according to any one of Claims 1 to 7, or else at least one air treatment assembly according to any one of Claims 8 or 9.

13. Transport vehicle according to the preceding claim 12, **characterized in that** the air conditioning device comprises:
- a main cold production zone (Z) which comprises a compressor (8), a main loop (10) carrying a main fluid, and a condensation stage (C) and an evaporation stage (E) traversed by this main loop (10); and
- an auxiliary loop (16) carrying an auxiliary fluid, this auxiliary loop exchanging heat with the main loop (10);
- this auxiliary loop (16) leading into the or each air treatment unit, the auxiliary fluid supplying the heat exchanger of this unit.

14. Transport vehicle according to one of Claims 12 or 13, **characterized in that** the auxiliary coolant is water optionally with an additive, in particular glycol.

15. Transport vehicle according to one of Claims 12 or 14, **characterized in that** this vehicle comprises an air treatment assembly according to claims 8 or 9.

## Patentansprüche

1. Luftaufbereitungsanlage (22₁) ausgebildet, um an eine Klimaanlage eines Transportfahrzeuges angebracht zu werden, insbesondere eines Straßen- oder Schienenfahrzeugs, das Druckluftflaschen aufweist, wobei die Anlage ein Gehäuse (30) und zumindest einen Wärmetauscher (40, 42) aufweist, der mit einem Hilfsfluid versorgt wird, wobei der Wärmetauscher so ausgestaltet ist, dass er die Luft, die für den Eintritt in die Fahrgastzelle des Fahrzeugs vorgesehen ist, aufbereitet, und diese Haupteinheit weiter Mittel (32) zur Aufnahme von Außenluft, Mittel (34) für den Auslass von Innenluft, Mittel (44₁) zum Einblasen von Luft in die Fahrgastzelle und einen Sensor (46) zum Messen von zumindest einem Parameter der Raumluft der Fahrgastzelle und Steuermittel (50) geeignet zum Steuern der Öffnung der Mittel (32) für den Einlass von Außenluft und Mittel (34) zum Auslass von Innenluft aufweist, wenn der Wert dieses Parameters größer oder kleiner ist als ein vorbestimmter Wert; wobei die Anlage (22₁) an eine Fahrzeugfahrgastzellenreinigungsvorrichtung angebracht ist, aufweisend eine Kartusche (52), welche eine Hilfssubstanz aufnimmt, insbesondere der desinfizierenden und/oder desodorierenden Art, Rohre (57, 59), Ventile (54, 61) und eine Winkeldüse (58) zum Leiten einer Mischung aus Luft und der zuvor genannten Hilfssubstanz in die Fahrgastzelle, **dadurch gekennzeichnet, dass** die FahrzeugfahrgastzellenreinigungsVorrichtung durch die Druckluftflaschen versorgt wird.

2. Luftaufbereitungsanlage nach Anspruch 1, **dadurch gekennzeichnet, dass** der Parameter den Kohlendioxidgehalt innerhalb der Fahrgastzelle darstellt.

3. Luftaufbereitungsanlage nach Anspruch 1 oder 2, **dadurch gekennzeichnet, dass** die Mittel für den Einlass von Außenluft und zum Ausbringen von Innenluft Lufteinlass- und Luftauslass-Klappen (32 und 34) und zumindest einen Lüfter (361, 362) aufweisen, die geeignet sind, die Außenluft und die Innenluft zu einem Wärmetauscher (40, 42) der Hauptaufbereitungseinheit zu leiten.

4. Luftaufbereitungsanlage nach einem der vorangegangenen Ansprüche, **dadurch gekennzeichnet, dass** die Ventilationsmittel zumindest einen Ventilator (441) aufweisen, und geeignet sind, die Luft, die durch den oder jeden Wärmetauscher (40 42) hindurchgetreten ist zu befördern.

5. Luftaufbereitungsanlage nach einem der vorangegangenen Ansprüche, **dadurch gekennzeichnet, dass** die Hauptaufbereitungsanlage (22₁) mit Steuerungsmittel (50) versehen ist, die geeignet sind das Ventil zu öffnen und die Mittel zum Einlass der Substanz betätigen, wenn der Motor stillsteht.

6. Luftaufbereitungsanlage nach einem der vorangegangenen Ansprüche, **dadurch gekennzeichnet, dass** diese eine Öffnung (BLOW) zum Abführen von Luft in Richtung der Fahrgastzelle (IN), eine Öffnung (FAF) zum Erneuern von Außenluft, eine Öffnung (REC) zum Erneuern von Innenluft und eine Öffnung (EXT) zum Ausbringen von Innenluft nach außen (OUT) aufweist.

7. Luftaufbereitungsanlage nach dem vorangegangenen Anspruch, **dadurch gekennzeichnet, dass** diese einen ersten Zirkulationsweg (f3) definiert, der die Aufbereitungsöffnung (REC) zur Ausbringöffnung (EXT) und einen zweiten Luftzirkulationsweg (f4) definiert, der die Erneuerungsöffnung (FAF) und die Ablassöffnung (BLOW) verbindet, und diese Einheit ebenfalls einen Wärmeaustauschbereich (70) zwischen diesen beiden Zirkulationswegen aufweist.

8. Luftaufbereitungszusammenbau ausgestaltet, um an eine Klimavorrichtung für ein Transportfahrzeug angebracht zu werden, aufweisend zwei oder mehrere Luftaufbereitungsanlagen nach einem der vorangegangenen Ansprüche.

9. Luftaufbereitungszusammenbau nach Anspruch 8, weiter aufweisend Steuermittel zum Bestimmen, dass die Anlagen (22₁, 22₂, 22₃) iterativ ihre Lufterneuerungssequenz beginnen, solange bis alle Anlagen die Lufterneuerungsoperation durchgeführt haben, eine nach der anderen.

10. Verfahren zum Steuern des Luftaufbereitungszusammenbaus nach Anspruch 8 oder 9, bei dem die Mittel (32, 34, 36) zum Zuführen von Außenluft und zum Abführen von Innenluft gestartet werden, wenn der Sensor (46) feststellt, dass ein Parameterwert größer oder kleiner ist als ein vorbestimmter Wert um eine Lufterneuerungssequenz durchzuführen, wobei die Einlass und Ausbringmittel gestoppt werden, wenn der Sensor einen Wert dieses Parameters feststellt, der wieder kleiner oder größer ist als der vorbestimmte Wert.

11. Verfahren nach Anspruch 10, **dadurch gekennzeichnet, dass** die Zeit (d) dieser Lufterneuerungssequenz, welche mittels einer ersten Aufbereitungseinheit (221) angewendet wird, gemessen wird, und dann zumindest eine andere Erneuerungssequenz mittels einer zweiten Aufbereitungseinheit (222-224) angewendet wird, eine nach der anderen, für eine dann so gemessene selbe Zeit (d).

12. Transportfahrzeug, insbesondere ein Bus, Gelenkbus, Straßenbahn, Eisenbahnwaggon, U-Bahn oder Eisenbahn aufweisend eine Karosserie (2), welche zumindest auf einer Achse sitzt, die mit Radeinheiten verbunden ist, insbesondere Räder (4, 6), und eine Luftklimaanlage aufweisend zumindest eine Luftaufbereitungsanlage nach einem der Ansprüche 1 bis 7 oder zumindest einer Luftaufbereitungszusammenbau nach einem der Ansprüche 8 oder 9.

13. Transportfahrzeug nach dem vorangegangenen Anspruch 12, **dadurch gekennzeichnet, dass** die Luftklimaanlage aufweist:
- eine Hauptkälteerzeugungszone (Z), die einen Kompressor (8), eine Hauptzirkulation (10) aufweisend ein Hauptfluid, und einen Abschnitt (C) und einen Verdampfungsabschnitt (E) aufweist, der von der Hauptzirkulation (C) durchlaufen wird; und
- eine Hilfszirkulation (16) mit einem Hilfsfluid, wobei die Hilfszirkulation Wärme mit der Hauptzirkulation (10) austauscht;
- die Hilfszirkulation (16) zu der oder jeder Luftaufbereitungseinheit führt, wobei das Hilfsfluid den Wärmetauscher dieser Einheit versorgt.

14. Transportfahrzeug nach einem der Ansprüche 12 oder 13, **dadurch gekennzeichnet, dass** das Hilfskühlmittel Wasser ist, gegebenenfalls mit einem Additiv versetzt, insbesondere mit Glykol.

15. Transportfahrzeug nach einem der Ansprüche 12 oder 14, **dadurch gekennzeichnet, dass** das Fahrzeug einen Luftaufbereitungszusammenbau nach Anspruch 8 oder 9 aufweist.

## Revendications

1. Unité de traitement de l'air (22₁) conçue pour être fixée à un dispositif de conditionnement de l'air d'un véhicule de transport comprenant des bouteilles d'air comprimé, en particulier du type routier ou ferroviaire, cette unité comprenant un corps (30), au moins un échangeur de chaleur (40, 42) alimenté par un fluide auxiliaire, cet échangeur de chaleur étant conçu pour conditionner l'air destiné à entrer dans le compartiment passager du véhicule, cette unité principale comprenant également un moyen (32) d'admission d'air extérieur, un moyen (34) d'extraction d'air intérieur, un moyen (44₁) de soufflage d'air vers le compartiment passager, un capteur (46) pour mesurer au moins un paramètre de l'air ambiant du compartiment passager, et un moyen de commande (50) adapté pour commander l'ouverture du moyen (32) d'admission d'air extérieur et du moyen (34) d'extraction d'air intérieur, lorsque la valeur de ce paramètre est supérieure ou inférieure à une valeur prédéterminée ; l'unité (22₁) étant équipée d'un dispositif de purification de compartiment passager de véhicule comprenant une cartouche (52), contenant une substance auxiliaire, notamment du type désinfectant et/ou désodorisant, des tuyaux (57, 59) et des soupapes (54, 61) et une buse de pulvérisation (58) pour diriger un mélange d'air et de la substance auxiliaire susmentionnée dans le compartiment passager, **caractérisée en ce que** ledit dispositif de purification de compartiment passager de véhicule est alimenté par lesdites bouteilles d'air comprimé.

2. Unité de traitement de l'air selon la revendication 1, **caractérisée en ce que** le paramètre est la teneur en dioxyde de carbone à l'intérieur du compartiment passager.

3. Unité de traitement de l'air selon les revendications 1 ou 2, **caractérisée en ce que** les moyens d'admission d'air extérieur et d'extraction d'air intérieur comprennent des volets d'admission et d'extraction d'air (32 et 34) et au moins un ventilateur (361, 362) adapté pour diriger l'air extérieur et l'air intérieur vers l'échangeur de chaleur (40, 42) de l'unité de traitement principale.

4. Unité de traitement de l'air selon l'une quelconque des revendications précédentes, **caractérisée en ce que** le moyen de soufflage comprend au moins un ventilateur (441) adapté pour souffler l'air qui est passé à travers le ou chaque échangeur de chaleur (40, 42).

5. Unité de traitement de l'air selon l'une quelconque des revendications précédentes, **caractérisées en ce que** l'unité de traitement principale (22₁) est dotée d'un moyen de commande (50) adapté pour ouvrir la soupape et pour actionner le moyen d'admission de cette substance lorsque le moteur est arrêté.

6. Unité de traitement de l'air selon l'une quelconque des revendications précédentes, **caractérisée en ce qu'**elle comprend une ouverture (BLOW) pourévacuer l'air dans la direction du compartiment passager (IN), une ouverture (FAF) pour renouveler l'air extérieur, une ouverture (REC) pour recycler l'air intérieur, et une ouverture (EXT) pour extraire l'air intérieur, vers l'extérieur (OUT).

7. Unité de traitement de l'air selon la revendication précédente, **caractérisée en ce qu'**elle définit un premier chemin de circulation d'air (f3) raccordant l'ouverture de recyclage (REC) à l'ouverture d'extraction (EXT) et un second chemin de circulation d'air (f4), raccordant l'ouverture de renouvellement (FAF) et l'ouverture d'évacuation (BLOW), cette unité comprenant également une zone d'échange de chaleur (70) entre ces deux chemins de circulation.

8. Ensemble de traitement de l'air conçu pour être fixé à un dispositif de conditionnement de l'air pour un véhicule de transport, comprenant deux unités de traitement de l'air ou plus, selon l'une quelconque des revendications précédentes.

9. Ensemble de traitement de l'air selon la revendication 8, comprenant en outre un moyen de commande configuré pour ordonner aux unités (22₁, 22₂, 22₃) de commencer de façon itérative leur séquence de renouvellement de l'air jusqu'à ce que toutes les unités aient réalisé l'opération de renouvellement de l'air, l'une après l'autre.

10. Procédé de commande de l'ensemble de traitement de l'air selon les revendications précédentes 8 ou 9, dans lequel les moyens (32, 34, 36) d'admission d'air extérieur et d'extraction d'air intérieur sont démarrés lorsque le capteur (46) détecte une valeur de paramètre qui est supérieure, ou inférieure, à une valeur prédéterminée, afin de réaliser la séquence de renouvellement de l'air, ensuite ces moyens d'admission et d'extraction sont arrêtés lorsque le capteur détecte une valeur de ce paramètre qui est à nouveau inférieure, ou supérieure, à cette valeur prédéterminée.

11. Procédé selon la revendication 10, **caractérisé en ce que** le temps (d) de ladite séquence de renouvellement de l'air appliquée au moyen d'une première unité de traitement (221) est mesuré, puis au moins une autre séquence de renouvellement de l'air est appliquée au moyen d'une seconde unité de traitement (222 à 224), successivement, pendant un temps (d) ainsi mesuré identique.

12. Véhicule de transport, notamment un bus, un trolleybus, un tramway, un car, un train souterrain ou un train de surface comprenant une carrosserie (2) reposant sur au moins un essieu associé à des organes roulants, notamment des roues (4, 6), et un dispositif de conditionnement de l'air comprenant au moins une unité de traitement de l'air selon l'une quelconque des revendications 1 à 7, ou sinon au moins un ensemble de traitement de l'air selon l'une quelconque des revendications 8 ou9.

13. Véhicule de transport selon la revendication 12 précédente, **caractérisé en ce que** le dispositif de conditionnement de l'air comprend :
- une zone de production de froid principale (2) qui comprend un compresseur (8), une boucle principale (10) transportant un fluide principal, et un étage de condensation (C) et un étage d'évaporation (E) traversés par cette boucle principale (10) ; et
- une boucle auxiliaire (16) transportant un fluide auxiliaire, cette boucle auxiliaire échangeant de la chaleur avec la boucle principale (10) ;
- cette boucle auxiliaire (16)menant dans la ou chaque unité de traitement de l'air, l'échangeur de chaleur de cette unité étant alimenté par le fluide auxiliaire.

14. Véhicule de transport selon l'une des revendications 12 ou 13, **caractérisé en ce que** le réfrigérant auxiliaire est de l'eau, facultativement avec un additif, en particulier du glycol.

15. Véhicule de transport selon l'une des revendications 12 ou 14, **caractérisé en ce que** ce véhicule comprend un ensemble de traitement de l'air selon les revendications 8 ou 9.
